# EUROPÄISCHE PATENTSCHRIFT

(11) **EP 0 904 991 B1**
(45) Veröffentlichungstag und Bekanntmachung des Hinweises auf die Patenterteilung: **03.12.2003**
(21) Anmeldenummer: 98117984.9
(22) Anmeldetag: 23.09.1998
(51) Int. Cl.: B60R 21/13

(54) **Überrollsicherheitssystem für Kraftfahrzeuge ohne starres tragendes Dach und dessen Herstellungsverfahren**
Rollover protection system for motor vehicles without a fixed rigid roof and method of producing said system
Système d'arceau de sécurité pour un véhicule automobile sans toit rigide fixe et méthode de fabrication d'un tel système

(30) Priorität: 24.09.1997 DE 19742105
(43) Veröffentlichungstag der Anmeldung: 31.03.1999
(73) Patentinhaber: ISE Innomotive Systems Europe GmbH, 51702 Bergneustadt (DE)
(72) Erfinder: Schulte, Manfred, 57489 Drolshagen (DE); Zupancic, Manuela, 51702 Bergneustadt (DE); Nowack, Reinhard, 57489 Drolshagen (DE)
(74) Vertreter: Fuchs Mehler Weiss & Fritzsche

(56) Entgegenhaltungen:
- DE-A- 19 604 423
- DE-U- 9 320 333
- US-A- 3 203 728
- US-A- 5 094 478

## Beschreibung

Die Erfindung betrifft ein Überrollsicherheitssystem für Kraftfahrzeuge, insbesondere für Kraftfahrzeuge ohne starres tragendes Dach mit einem Bügelsystem, welches direkt hinter den Sitzen an der tragenden Struktur des Kraftfahrzeuges befestigt ist.

Die Aufgabe von Überrollsicherheitssystemen für Kraftfahrzeuge ist es, die Insassen vor den Folgen eines Überschlags des Kraftfahrzeuges zu schützen. Das System muß im Falle eines Überschlags einen hinreichend großen Überlebensraum für die Insassen bereitstellen und gewährleisten, daß Verletzungen durch Aufprall der Insassen auf die tragenden Strukturen des Überrollsicherheitssystems vermieden werden. Aus dem Gebrauchsmuster G 85 23 831.7 ist eine Überrollschutzvorrichtung für ein zweisitziges Cabrio bekannt, welches als Stahlgitterkonstruktion aufgebaut und in der Ebene hinter den Sitzen an der tragenden Struktur des Fahrzeuges starr befestigt ist. Das Stahlgitter ist aus massivem Stahlrohr mit kreisförmigem Querschnitt aufgebaut. Die den Überlebensraum der Insassen bestimmenden Überrollbügelsegmente bestehen aus einer U-förmigen Struktur, deren freien Schenkel nach unten in den Stahlrohrrahmen integriert sind. Die Überrollbügelsegmente sind durch Streben im Gitterrohrrahmen miteinander verbunden und mittels Ankerplatten an der tragenden Struktur des Fahrzeuges abgestützt. Das geschlossene Ende der U-förmigen Überrollbügelsegmente überragt die Kopfstützen der Sitze und ist aus Designgründen mit einer dünnen Kunststoffschicht überzogen.

Es hat sich gezeigt, daß eine Stahlkonstruktion dieser Art ein sehr hohes Eigengewicht aufweist und die Sicherheitserfordernisse bei Aufprall eines Insassen auf die Überrollbügel nur bedingt erfüllt, so daß Fahrzeuginsassen bei Unfällen durch den ungedämpften Aufprall auf den Überrollbügel immer wieder Verletzungen davontragen können.

EP-A-0788932 zeigt ein System und ein Verfahren gemäß dem Oberbegriff der Ansprüche 1 und 7.

Der Erfindung liegt die Aufgabe zugrunde, ein Überrollsicherheitssystem mit geringem Eigengewicht und Maßnahmen zum Schutz der Insassen bei Aufprall auf die freiliegenden Partien der Überrollbügelsegmente des Überrollsicherheitssystem sowie ein entsprechendes Herstellungsverfahren bereit zu stellen.

Diese Aufgabe wird durch die Merkmale der Anspruchs 1 und ein Herstellungsverfahren gemäß des Ansprunchs 8 gelöst.

Die Erfindung schlägt zwei Hauptmaßnahmen zur Minderung der Auswirkungen eines Aufpralls der Insassen auf die unverdeckten Teile der Überrollbügel des Überrollsicherheitssystems vor. Vorteilhafterweise wird das geschlossene obere Ende der Überrollbügel, die über die Kopfstützen des Fahrzeugsitzes hinausragen, mit einem elastischen energieabsorbierenden Material ummantelt, so daß das Aufschlagen z.B. des Kopfes auf das Material der freiliegenden Trägerteile abgepolstert und gedämpft wird. Die Erfindung stellt weiterhin eine zweite Maßnahme zum Abfangen und Dämpfen der Aufprallenergie eines Fahrzeuginsassens auf das Überrollschutzsystem vor. Hierbei sind die starr montierten Befestigungselemente des Überrollbügels mittels einer elastischen Masse mit dem Trägerrahmensegmenten des Überrollbügels verbunden. Bei Aufprall eines Insassen auf den Überrollbügel ist er mittels der elastischen Masse dazu in der Lage, den Stoß durch geringe Ausweichbewegungen des Überrollbügels abzudämpfen und somit zu reduzieren.

Dem Leichtbau wird in der Erfindung dadurch Rechnung getragen, daß als Überrollbügelsegmente U-förmige Hohlprofile die direkt an die vorhandene Fahrzeugtagstrukur angebunden sind, eingesetzt werden. Zusätzlich sind die Hohlprofile in ihrem Innern durch Vollprofilsegmente, an den für die Erfordernisse der Tragfähigkeit notwendigen Stellen, verstärkt.

Weitere Vorteile der erfinderischen Idee werden anhand der Beschreibung und der Zeichnungen genauer dargestellt.
- Fig. 1: Vorderansicht eines Überrollbügels des Überrollsicherheitssystems
- Fig. 2: Schnitt durch das obere geschlossene Ende eines Überrollbügels des Überrollsicherheitssystems
- Fig. 3: Radialschnitt durch die elastische Verbindung zwischen Befestigungselement, elastischer Masse und Trägerrohr.
- Fig. 4: Seitlicher Aufbruch des Überrollbügels.

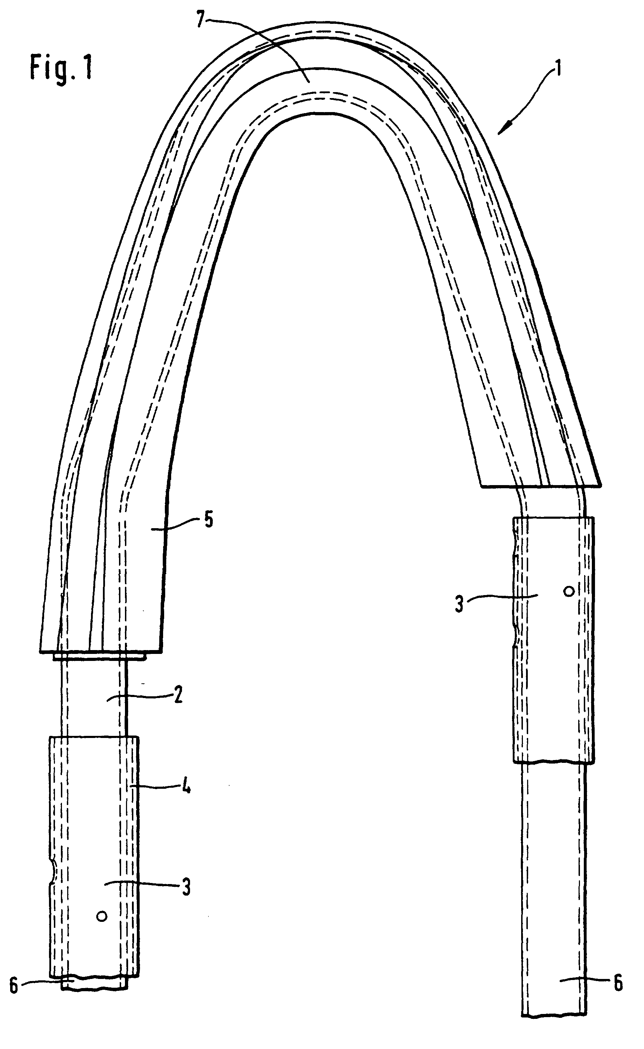

Fig. 1 zeigt die Vorderansicht eines Überrollbügels 1 des Überrollsicherheitssystems. Das U-förmige Trägersegment 2 ist an seinem oberen geschlossenen Ende 7 mit einer elastischen energieabsorbierenden Masse 5 ummantelt. Über die beiden freien unteren Schenkel 6 des Überrollbügels ist jeweils ein Befestigungselement 3 übergestülpt.

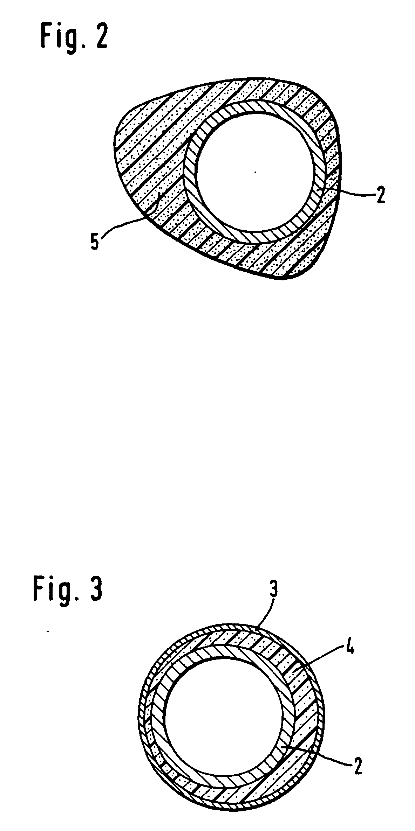

In Fig. 2 ist ein Querschnitt durch das obere geschlossene Ende 7 des Überrollbügels 1 dargestellt. Das Trägersegment 2 des Überrollbügels 1 hat hier einen kreisförmigen Querschnitt und ist mit einem PU-Schaum umschäumt. Auf der Seite des Überrollbügels 1, der an den Sitz und somit an den Insassen des Fahrzeuges grenzt, ist die elastische energieabsorbierende Masse 5 verstärkt aufgetragen, um die Insassen vor den Folgen eines Aufpralls auf die frei zugänglichen Teile des Überrollbügel 1 zu schützen.

Vorteilhafter Weise kann die Ummantelung des oberen geschlossenen Endes 7 des Trägersegments 2 aus unterschidlichen Materialien verschiedener Härten ausgeführt werden.

Die Querschnittsform des Trägerrahmens 2 kann je nach den Erfordernissen der möglicherweise entstehenden Belastungen verändert werden. Für die Aufnahme einer seitlich einwirkenden Kraft kann das Profil z.B. als Oval mit dem größeren Durchmesser in Kraftwirkungsrichtung ausgeführt werden um die Steifigkeit zu erhöhen. Weiterhin sind andere Profile wie z.B. ein T-Profil oder viereckige Profile denkbar.

Die Verbindung zwischen Trägerrahmen 2 und Befestigungselement 3 des Überrollbügels 1 ist in Fig. 3 dargestellt. Hier ist das Befestigungselement 3 als kreisrunde Hülse ausgeführt und über das Trägersegment 2 des Überrollbügels 1 geschoben. Der Zwischenraum zwischen Befestigungshülse 3 und Trägersegment 2 wird mit einer elastischen Masse 4 gefüllt.

Vorteilhafterweise können zur Ausführung der elastischen Verbindung zwischen Befestigungselement 3 und Überrollbügelträgersegment 2 verschiedene Kunststoffe und verschiedene Strukturaufbauten der elastischen Masse 5 verwendet werden. So kann der Zwischenraum zwischen Befestigungselement 3 und Trägersegment 2 des Überrollbügels z.B. mit PU-Schaum verschiedener Härte ausgeschäumt sein.

Die Erfindung schlägt weiterhin vor, beide elastische Massen aus dem gleichen Material herzustellen. Die verschiedenen geforderten mechanischen Eigenschaften wie Härte und Duktilität werden durch die Variation der Zeiten im Schäumungsprozeß eingestellt. Zur Herstellung des Überrollbügels 1 wird ein einziges Werkzeug verwendet. Zuerst wird die Masse aufgeschäumt, die aufgrund der Erfordernisse an Härte und Steifigkeit die längste Aushärtungszeit benötigt. Ist das benötigte Massevolumen in das Gießvolumen des Werkzeug eingeführt, wird der Spritzkanal im Werkzeug auf das zweite Gießvolumen für die zweite Masse umgestellt und der Werkstoff für das zweite Gießvolumen eingeführt. Die Zeiten für den Schäumungsprozeß und für das Aushärten der Massen 4,5 sind so aufeinander abgestimmt, daß nach Beendigung des Fertigungsprozesses das Werkzeug geöffnet und das Werkstück fertig entnommen werden kann.

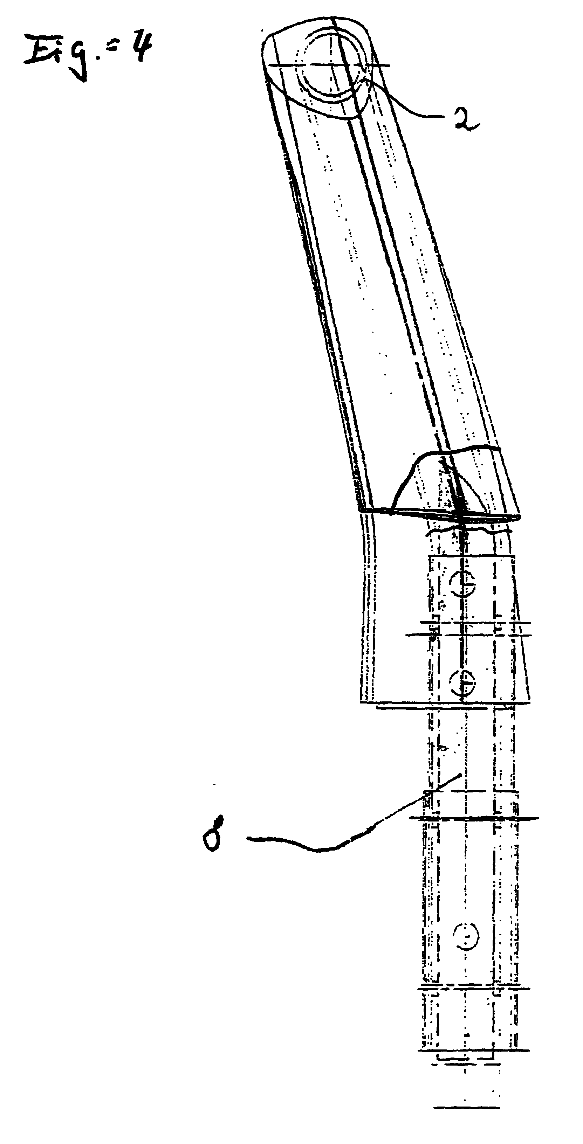

Der in Fig.4 dargestellte seitliche Aufbruch des Trägersegments 2 zeigt eine Verstärkung des Trägers im Inneren des Hohlprofils. Im Inneren des Hohlprofils werden je nach Bedarf Vollprofilsegmente 8 zur Versteifung des Trägersegments 2 angebracht.
Vorteilhafter Weise können diese der Form des Trägersegments 2 und den aufzunehmenden Belastungen in Form, Lage und Material angepaßt werden.

## Patentansprüche

1. Überrollsicherheitssystem für Kraftfahrzeuge, mit einem U-förmigen Überrollbügel (1), der zwei parallel verlaufende freie Schenkel (6) besitzt, über die jeweils eine Befestigungshülse (3) gestülpt ist, die fahrzeugfest anordenbar ist und in der jeweils der zugehörige freie Schenkel (6) elastisch nachgebend und energieabsorbierend aufgenommen ist, wobei das obere geschlossene Ende (7) des Überrollbügels (1) mit einer elastischen, energieabsorbierenden Hülle (5) aus aufgeschäumtem Kunststoff ummantelt ist, und die Befestigungshülsen (3) jeweils über ein den Zwischenraum zwischen Befestigungshülse (3) und aufgenommenem Schenkel (6) ausfüllendes Kunststoff-Element (4) elastisch nachgebend und energieabsorbierend mit den freien Schenkeln (6) des Überrollbügels (1) verbunden sind, **dadurch gekennzeichnet, daß**
das Kunststoff-Element (4) aus einer Befestigungsmasse in Form eines Kunststoffschaums besteht.

2. Überrollsicherheitssystem nach Anspruch 1, **dadurch gekennzeichnet, daß** der Zwischenraum zwischen Befestigungshülse (3) und dem aufgenommenen Schenkel (6) des Überrollbügels (1) mit einem Kunststoffschaum verschiedener Härte ausgeschäumt ist.

3. Überrollsicherheitssystem nach Anspruch 2, **dadurch gekennzeichnet, daß** der Kunststoff-Schaum ein PU-Schaum ist.

4. Überrollsicherheitssystem nach Anspruch 1, **dadurch gekennzeichnet, daß** die Hülle (5) aus unterschiedlichen Kunststoff-Materialien verschiedener Härten ausgeführt ist.

5. Überrollsicherheitssystem nach Anspruch 4, **dadurch gekennzeichnet, daß** die Hülle (5) auf der den Fahrzeuginsassen zugewandten Seite stärker ausgebildet ist.

6. Überrollsicherheitssystem nach Anspruch 1 oder 2, 3 und 4 oder 5, **dadurch gekennzeichnet, daß** die elastische Verbindung zwischen den Befestigungshülsen (3) und den freien Schenkeln (6) und die elastische energieabsorbierende Hülle (5) des oberen geschlossenen Endes (7) des Überrollbügels (1) aus dem gleichen Material mit verschiedenen Härten besteht.

7. Verfahren zur Herstellung des Überrollsicherheitssystems nach einem der Ansprüche 1 bis 6, bei dem das obere Ende des Überrollbügels (1) mittels einer elastischen energieabsorbierenden Hülle (5) aus aufgeschäumtem Kunststoff ummantelt wird, wobei die Befestigungshülsen (3) über die Schenkel (6) gestülpt und die elastischen Kunststoff-Elemente (4) zwischen die Befestigungshülsen (3) und die Schenkel (6) eingebracht werden, **dadurch gekennzeichnet, daß** die elastische energieabsorbierende Hülle (5) und die elastischen, energieabsorbierenden Kunststoff-Elemente (4) aus Kunststoffschaum der Befestigungshülsen (3) im selben Werkzeug hergestellt werden, und zuerst die Masse aufgeschäumt wird, die aufgrund der Erfordernisse an Härte und Steifigkeit die längste Aushärtungszeit benötigt.

8. Verfahren nach Anspruch 7, **dadurch gekennzeichnet, daß** die elastische, ernergieabsorbierende Masse (5) zuerst um das obere geschlossene Ende (7) des Überrollbügels (1) geschäumt wird.

9. Verfahren nach Anspruch 7 und 8, **dadurch gekennzeichnet, daß** die elastische, energieabsorbierende Befestigungsmasse (4) nach dem Schäumen der elastischen, energieabsorbierenden Masse (5) am oberen Ende in den Befestigungshülsen (3) ausgeschäumt wird.

10. Verfahren nach Anspruch 8 und 9, **dadurch gekennzeichnet, daß** die elastischen Massen (4, 5) verschiedenen Aushärtezeiten unterzogen werden, um unterschiedliche Härten zu erreichen.

11. Verfahren nach einem der Ansprüche 7 bis 10, **dadurch gekennzeichnet, daß** die Zeiten für die Ausschäumung und das Aushärten der elastischen Massen (4, 5) so aufeinander abgestimmt sind, daß sie ihre vorgegebene Härte gleichzeitig vor dem Herausnehmen des Werkstücks aus dem Werkzeug erreicht haben.

## Claims

1. Roll-over safety system for motor vehicles, having a U-shaped roll-over bar (1) which has two parallel free limbs (6) over each of which there is placed a securing sleeve (3) which can be fixedly arranged on the vehicle and in which the associated free limb (6) is received in a resiliently yielding and energy-absorbing manner, wherein the upper closed end (7) of the roll-over bar (1) is encased in a resilient, energy-absorbing sleeve (5) of foamed plastics material and wherein the securing sleeves (3) are each connected in a resiliently yielding and energy-absorbing manner to the free limbs (6) of the roll-over bar (1) by way of a plastics element (4) which fills the gap between the securing sleeve (3) and the received limb (6), **characterised in that** the plastics element (4) comprises a securing compound in the form of a plastics foam.

2. Roll-over safety system according to claim 1, **characterised in that** the gap between the securing sleeve (3) and the received limb (6) of the roll-over bar (1) is filled with a plastics foam of varying hardness.

3. Roll-over safety system according to claim 2, **characterised in that** the plastics foam is a PU foam.

4. Roll-over safety system according to claim 1, **characterised in that** the sleeve (5) is made from different plastics materials having different hardnesses.

5. Roll-over safety system according to claim 4, **characterised in that** the sleeve (5) is of stronger construction on the side facing the occupants of the vehicle.

6. Roll-over safety system according to claim 1 or 2, 3 and 4 or 5, **characterised in that** the resilient connection between the fastening sleeves (3) and the free limbs (6) and the resilient energy-absorbing sleeve (5) of the upper closed end (7) of the roll-over bar (1) are made of the same material having varying hardness.

7. Process for the production of the roll-over safety system according to any one of claims 1 to 6, in which the upper end of the roll-over bar (1) is encased in a resilient energy-absorbing sleeve (5) of foamed plastics material, wherein the securing sleeves (3) are slipped over the limbs (6) and the resilient plastics elements (4) are inserted between the securing sleeves (3) and the limbs (6), **characterised in that** the resilient energy-absorbing sleeve (5) and the resilient energy-absorbing plastics elements (4) of plastics foam of the securing sleeves (3) are produced in the same tool, and the composition that requires the longest curing time owing to requirements in respect of hardness and rigidity is foamed first.

8. Process according to claim 7, **characterised in that** the resilient energy-absorbing composition (5) is first foamed around the upper closed end (7) of the roll-over bar (1).

9. Process according to claims 7 and 8, **characterised in that** the resilient energy-absorbing securing composition (4) is foamed into the securing sleeves (3) after foaming of the resilient energy-absorbing composition (5) at the upper end.

10. Process according to claims 8 and 9, **characterised in that** the resilient compositions (4, 5) are subjected to different curing times in order to achieve different hardnesses.

11. Process according to any one of claims 7 to 10, **characterised in that** the times for the foaming and curing of the resilient compositions (4, 5) are so matched with one another that they have reached their predetermined hardness simultaneously before removal of the workpiece from the tool.

## Revendications

1. Système d'arceau de sécurité pour des véhicules automobiles, avec un arceau de sécurité (1) en forme de U, qui possède deux branches libres (6) de tracés parallèles, par-dessus chacune desquelles est emmanchée respectivement une douille de fixation (3), qui peut être disposée fixement sur le véhicule et dans laquelle est logée respectivement la branche libre correspondante (6), fléchissant élastiquement et absorbant de l'énergie, moyennant quoi l'extrémité supérieure fermée (7) de l'arceau de sécurité (1) est garnie d'une enveloppe élastique absorbant l'énergie (5) en plastique expansé et les douilles de fixation (3) sont reliées chacune aux branches libres (6) de l'arceau de sécurité (1), fléchissant élastiquement et absorbant l'énergie par un élément de plastique (4) remplissant l'espace intermédiaire entre la douille de fixation (3) et la branche logée (6), **caractérisé en ce que** l'élément de plastique (4) consiste en une masse de fixation sous forme d'une mousse de plastique.

2. Système d'arceau de sécurité selon la revendication 1, **caractérisé en ce que** l'espace intermédiaire entre la douille de fixation (3) et la branche (6) logée de l'arceau de sécurité (1) est rempli d'une mousse de plastique de différente dureté.

3. Système d'arceau de sécurité selon la revendication 2, **caractérisé en ce que** la mousse de plastique est une mousse de PU.

4. Système d'arceau de sécurité selon la revendication 1, **caractérisé en ce que** l'enveloppe (5) est réalisée en différentes matières plastiques de différentes duretés.

5. Système d'arceau de sécurité selon la revendication 4, **caractérisé en ce que** l'enveloppe (5) est configurée plus épaisse du côté orienté vers les occupants du véhicule.

6. Système d'arceau de sécurité selon les revendications 1 ou 2, 3 et 4 ou 5, **caractérisé en ce que** la liaison élastique entre les éléments de fixation (3) et les branches libres (6), et l'enveloppe élastique absorbant l'énergie (5) de l'extrémité supérieure fermée(7) de l'arceau de sécurité (1) consistent en le même matériau avec différentes duretés.

7. Procédé de fabrication du système d'arceau de sécurité selon l'une des revendications 1 à 6, pour lequel l'extrémité supérieure de l'arceau de sécurité (1) est enrobée au moyen d'une enveloppe élastique absorbant l'énergie (5) en plastique expansé, moyennant quoi les douilles de fixation (3) sont emmanchées par-dessus les branches (6) et les éléments de plastique (4) élastiques sont introduits entre les douilles de fixation (3) et les branches (6), **caractérisé en ce que** l'enveloppe élastique absorbant l'énergie (5) et les éléments élastiques de plastique (4), absorbant l' énergie, en mousse de plastique des douilles de fixation (3) sont réalisés dans le même moule, et **en ce que** la masse qui, compte tenu des nécessités de dureté et de rigidité, réclame le temps de durcissement le plus long, est expansée en premier.

8. Procédé selon la revendication 7, **caractérisé en ce que** la masse élastique absorbant l' énergie (5) est expansée d'abord autour de l'extrémité supérieure fermée (7) de l'arceau de sécurité (1).

9. Procédé selon les revendications 7 et 8, **caractérisé en ce que** la masse élastique de fixation absorbant l'énergie (4) est expansée après l'expansion de la masse élastique absorbant l'énergie (5) à l'extrémité supérieure dans les douilles de fixation (3).

10. Procédé selon les revendications 8 et 9, **caractérisé en ce que** les masses élastiques (4, 5) sont soumises à différents temps de durcissement pour atteindre différentes duretés.

11. Procédé selon une des revendications 7 à 10, **caractérisé en ce que** les temps pour l'expansion et le durcissement des masses élastiques (4, 5) sont adaptés réciproquement de telle sorte qu'elles atteignent leur dureté de consigne en même temps avant l'extraction de la pièce hors du moule.
